# EUROPEAN PATENT APPLICATION

(11) **EP 4 790 844 A1**
(43) Date of publication of application: **12.08.2026**
(21) Application number: 26154784.8
(22) Date of filing: 28.01.2026
(51) Int. Cl.: H01R 13/59, H01R 13/66, H01R 13/717, H01R 13/52

(54) **HOLLOW ELEMENT, CONNECTOR ASSEMBLY AND CONNECTOR STATUS INDICATION SYSTEM**

(30) Priority: 11.02.2025 GB 202501995
(71) Applicant: Harting International Innovation AG, 2504 Biel (CH)
(72) Inventor: Friesen, Markus, 2504 Biel/Bienne (CH); Cording, Christian, 2504 Biel (CH); Buschmann, Jana, 2504 Biel (CH); Riechmann, Till, 2504 Biel (CH)

(57) **Abstract**

The present disclosure relates to a hollow element (12) for a connector housing (18) of a plug connector, the hollow element (12) having an elongated element body with a first axial end (23) and a second axial end (24), with the first axial end (23) being configured for connection with the connector housing (18) and the second axial end (24) being configured for receiving a cable gland body (16) of a cable gland (10), wherein an element body of the hollow element (12) includes a transparent region with a cavity (22) provided on an inner circumference (25) of the hollow element (12) facing the received cable gland body (16) and wherein the cavity (22) is configured for housing at least one light source (13). The disclosure further relates to a plug connector assembly (26) and a connector status indication system (40).

## Description

### Field of the invention

The invention concerns a hollow element, a connector assembly, and a connector status indication system.

### Background

Cable glands attached to connector housings are widely used as mechanical cable entry devices in various industrial applications, providing strain relief, sealing, and electrical termination. Current designs are optimized for functionality, including ingress protection and compliance with safety standards, but they lack built-in visual indicators for the connector status. Existing solutions for e. g. voltage indication typically rely on external devices such as standalone LED or neon indicators. Such solutions often require significant modifications to existing equipment or enclosures and cannot be seamlessly integrated into connector assemblies without compromising ingress protection or mechanical integrity. For example, high-voltage applications may use indicators, whereas these systems are unsuitable for low-voltage scenarios and cannot provide status information when the connector is unplugged i.e. in a passive state. WO2020074044 describes a plug connector with an elastic, transparent seal that can also function as a light transmitter. The seal comprises light-conducting arms, which transmit light from a light source located within the plug connector. The solution does not provide a solution independent from a light source in the plug connector and does not allow for retrofitting of connector assemblies. Additionally, energy-harvesting technologies such as inductive coils have been proposed but are limited to detecting current rather than voltage, which restricts their applicability to alternating current (AC) systems.

Against this background, the problem to be solved by the invention is to provide a solution for integrating status indication directly into connector assemblies without altering a cable gland or connector housing design.

### Summary

The problem is solved by a hollow element according to claim 1, a connector assembly according to claim 20, and a connector status indication system according to claim 25 and a use according to claim 31.

Preferred embodiments of the invention are subject of the dependent claims.

The problem is solved in particular by a hollow element for a connector housing of a plug connector, the hollow element having an elongated element body with a first axial end and a second axial end, with the first axial end being configured for connection with the connector housing of and the second axial end being configured for receiving a cable gland body of a cable gland, wherein the element body of the hollow element comprises a transparent region with a cavity provided on an inner circumference of the transparent region facing the received cable gland body and wherein the cavity is configured for housing at least one light source. It is an advantage, that the invention provides an improved plug connector assembly having a status indication and at the same time offers a possibility for retrofitting by inserting the hollow element between a connector housing and a cable gland in assemblies without status indication.

In contrast to solutions where a light source is integrated directly into a cable gland sleeve, the hollow element of the present invention is provided as a separate intermediate component that preserves the standard design of both the cable gland body and the connector housing.

The inclusion of a transparent region in the element body allows light emitted by the light source to be visible irrespective of the position and integration of the connector or connector housing thus facilitating operational status monitoring, also from different angles and in various mounting environments of the plug connector assembly. The cavity designed to receive or house the light source ensures that the light source is precisely located and securely integrated, minimizing external components and reducing assembly complexity. The combination of the connector housing interface at the first axial end and the cable gland interface at the second axial end ensures compatibility with standard components while maintaining a compact design. By incorporating the light source within a cavity of the transparent region, the design protects the light source from falling out or loss as well as against environmental influences due to the cable gland body received and positioned in the hollow element or at least a portion thereof and covering the cavity.

As used in the context with the description of the present invention the term "cable gland" (synonymously also referred to as cord grip, cable connector, or strain relief), is defined as a mechanical device used to securely attach and seal the end of a cable to a piece of equipment or enclosure. It provides strain relief, ensures environmental protection, and can maintain ingress protection -IP- ratings, safeguarding against dust, water, or other contaminants. Cable glands are commonly used in electrical, instrumentation, and automation applications.

As used in the context with the description of the present invention the terms "LED" (abbreviation for Light Emitting Diode) is defined as a semiconductor device that emits light when an electric current passes through it. LED are energy-efficient, long-lasting, and available in diverse colours and intensities. The term "LED light source" refers to a lighting component that uses LED to produce illumination. These light sources are commonly found in various applications, such as general lighting, displays, and indicators.

As used in the context with the description of the present invention the term "cable" (synonymously also referred to as cord, conductor bundle, electrical cable or power cable) is defined as a group of one or more insulated conductors (wires) bound together, often with a protective outer sheath, used for transmitting i. a. electrical power, signals, or data.

As used in the context with the description of the present invention the terms "wire" and "lead" (synonymously also referred to as conductor, strand, electrical wire, lead) are defined as a single strand of metal (usually copper or aluminium) that conducts electricity or signals. Wires can be insulated or bare and are often used e.g. individually or combined into cables for electrical circuits.

In some embodiments the cavity is configured closeable by the received cable gland body. It is an advantage of the closeable design, that the cavity is shielded by the cable gland body thereby protecting the light source and eliminating the risk of the light source changing its position or falling out of the cavity even under harsh conditions such as vibrations or other mechanical impact on the plug connector assembly.

This arrangement, wherein the cavity is closed by the received cable gland body, differs from configurations where a light source is directly embedded within the material of a cable gland sleeve, as it allows the light source to be inserted into the cavity during assembly or retrofitting rather than requiring integration during manufacture of the cable gland.

Enclosing the light source within the cavity also eliminates or at least reduces the impact of environmental factors such as dust, moisture, or other contaminants on the light source or any other components housed or received within the cavity. Closing the cavity by means of the cable gland body also eliminates the need for additional sealing mechanisms, thus reducing the number of components.

In some embodiments the hollow element is configured as the exclusively transparent component of the plug connector assembly. In such embodiments, the cable gland body and the connector housing are formed from non-transparent materials, while the hollow element comprises the transparent region through which light emitted by the light source is visible. This configuration ensures that the status indication is provided solely through the hollow element, allowing for a clear and defined light emission area while maintaining the structural and material properties of standard cable gland bodies and connector housings.

In alternative embodiments the cavity is provided on an outer circumference of the hollow element. In such embodiments, the cable gland body comprises an internal thread configured to be screwed onto a corresponding external thread of the hollow element, wherein the cable gland body covers the cavity from the outside of the hollow element. The light source is thereby held within the cavity by the cable gland body screwed onto the hollow element.

In these embodiments, at least a portion of the cable gland body is configured as transparent to allow light emitted by the light source to be visible through the cable gland body.

This alternative configuration provides flexibility in the arrangement of components while maintaining the protective enclosure of the light source within the cavity.

In some embodiments the cavity is provided in a region of the element body adjacent to the second axial end of the element body. The placement of the cavity near the second axial end ensures the light source being positioned close to the cable gland body, allowing enhanced visibility of the light source also in plug connector assemblies integrated in narrow or remote positions. The adjacency of the cavity to the second axial end facilitates seamless mechanical and functional interaction with the cable gland body, simplifying assembly. Locating the cavity near the second axial end utilizes space effectively and contributes to a compact overall design. The configuration according to this embodiment also enables easy access to the cavity for inspection or replacement of components, such as the light source, without having to disassemble the entire connector.

In some embodiments the means for mechanically attaching the element body to the connector housing and/or the cable gland body are provided at the first and/or second axial end. The means therein are in particular configured as latching, plugging, clamping, or threading means. The mechanical attachment means provide a robust and reliable connection, ensuring that the element body remains firmly attached to the connector housing and/or cable gland body during operation, even under harsh conditions such as vibrations or other mechanical impact on the connector assembly. The inclusion of standardized or integrated attachment means simplifies the assembly process. By providing stable mechanical connections, the attachment enhance the durability and longevity of the system. The ability to attach to either the connector housing, the cable gland body, or both, increases the versatility of the hollow element for use in a wide range of applications, while the mechanical attachments reinforce the overall stability of the assembly.

In some embodiments the means are provided in an outer circumferential surface region of the first axial end and an inner circumferential surface region of the second axial end. The placement of attachment means on the outer circumferential surface at the first axial end and the inner circumferential surface at the second axial end allows for complementary interfacing with the connector housing and cable gland body, ensuring secure and stable connections. The use of circumferential surface regions for the attachment means enables a compact design, conserving space while maintaining functionality and robustness. It is an advantage that the configuration according to the present embodiment allows for compatibility with a variety of connector housings and cable gland bodies, enhancing the adaptability of the hollow element for different applications. The circumferential positioning of the attachment means also supports the optional integration of sealing elements, such as O-rings or gaskets.

In some embodiments the hollow element is integrally moulded with the connector housing or the cable gland body or provided as a separate element connectable with the connector housing and the cable gland body. In some embodiments, when the hollow element is provided as a separate element, the hollow element is formed by one of casting, extrusion moulding, injection moulding, and additive manufacturing, preferably 3D-printing. It is an advantage of this embodiment that these manufacturing techniques enable the production of a high-quality, standalone hollow element that can be seamlessly incorporated into the connector assembly. The separate hollow element also allows for easy retrofitting of existing connector assemblies without requiring modifications to the connector housing or cable gland body. Techniques such as injection moulding and 3D printing enable the production of detailed and highly accurate components, ensuring perfect fit and optimal performance. The ability to use a variety of materials (e.g. transparent plastics) in these manufacturing methods enhances the durability, transparency, and overall functionality of the hollow element. Additive manufacturing, especially 3D printing, supports rapid prototyping and customization, allowing for tailored designs to meet specific application requirements.

In alternative embodiments when the hollow element is provided integrally moulded in the connector housing or the cable gland body, the connector housing or the cable gland body and the hollow element are formed by one of multi-component casting, co-casting, sequential extrusion, co-extrusion, multi-component co- or sequential injection moulding, thermoforming, mechanical, thermal or chemical bonding, insertion moulding, and additive manufacturing, preferably 3D-printing.

It is an advantage that the hollow element and the cable gland body or connector housing form a unified structure. The manufacturing methods enable the seamless combination of the cable gland body or connector housing and the hollow element into a single functional unit, ensuring structural integrity mechanical strength and durability. Techniques such as multi-component moulding or additive manufacturing (e.g., 3D printing) allow for complex geometries and customized designs, adapting the assembly to diverse applications and customer needs. Methods like co-injection moulding and co-extrusion enable the simultaneous formation of multiple components, reducing production time and costs. Multi-component and co-casting methods allow for the use of dissimilar materials for the cable gland body or the connector housing and the hollow element, optimizing mechanical strength, transparency, or flexibility. The integrally moulded design provides the advantage of minimizing the risk of component separation or mechanical failure over time, ensuring reliable long-term performance. As a further advantage the manufacturing methods optionally enable the incorporation of the light source in the same manufacturing step.

In some embodiments the at least one light source is provided as one of moulded into the cavity or inserted in the cavity. If the light source is embedded within the cavity and/or the transparent material of the hollow element during the manufacturing process, this approach creates a unified, robust structure where the light source is permanently encased and protected from environmental factors such as dust, moisture, and mechanical stress. If in contrast thereto the light source is designed as a separate, replaceable component that can be inserted into or attached to the cavity in the hollow element this configuration allows for the convenient retrofitting of light source functionality into existing installations or for replacement purposes without altering the original cavity or hollow element structure. While the moulded integration ensures a streamlined production process for new elements, the retrofit option provides flexibility for upgrading or repairing existing installations. Both configurations advantageously support a wide range of use cases, from new installations requiring integrated solutions to older setups needing retrofitting.

In some embodiments the light source is configured as a ring element, preferably comprising at least two hinged, in particular film-hinged half-shells. In this embodiment, the light source is in particular configured as a ring element, designed to fit into the cavity within the hollow element. The ring element preferably comprises at least two hinged half-shells, which are connected by film hinges. This design allows the ring to open and close, enabling easy installation in the cavity and around pre-installed cables without the need for cable disconnection or extensive disassembly. The half-shells can be securely closed and locked in place after being positioned around, forming a continuous ring that comprises the light source.

In some embodiments the at least one light source comprises pre-attached connection leads configured for connection to current-carrying wires within the connector housing by plug or clamp contacts, tapping contacts or crimping. The pre-attached connection leads are designed for straightforward connection to current-carrying wires in the cable or current-carrying wires associated with the connector housing. The connection can be made using methods such as tapping contacts like insulation displacement connectors or wire tapping clips or crimping techniques such as crimp terminals or sleeves. Pre-attached connection leads provide the advantage of simplifying the installation process, reducing the need for additional wiring or complex assembly during setup. The option to use plug or clamp contacts, tapping contacts or crimping further provides flexibility to suit various installation preferences and tools, making the system adaptable to different application scenarios. The pre-attached leads also enable rapid connection to existing cables, reducing installation time and minimizing downtime in industrial environments. The tapping or crimping methods provide a robust electrical connection that ensures consistent performance of the light source, while the pre-attached leads are compatible with a wide range of cable types without requiring significant modifications to the connector housing or the associated wires. As a further advantage, the design can be adapted to accommodate various voltage levels (e.g., low-voltage DC or high-voltage AC), enhancing its applicability across different applications.

In some embodiments the at least one light source comprises electrical connection means, in particular plug or clamp contacts, configured to receive current-carrying wires or connection leads extending from within the connector housing towards the light source. The connection means thereby ensure a secure and efficient interface between the light source and the electrical wiring in the connector housing. The inclusion of plug or clamp contacts in the light source makes the light source compatible with various wiring and installation requirements, catering to a wide range of industrial applications. This embodiment is particularly suited for retrofitting existing plug connector assemblies, allowing seamless integration without significant modifications to the wiring infrastructure, wherein the robust connection ensures accurate and continuous status indication. By providing standardized electrical connection means, the design reduces production costs while maintaining flexibility for various end-user requirements and can support a variety of voltage levels, enabling use in low-voltage DC and high-voltage AC systems.

In some embodiments the at least one light source is configured as an LED light source, in particular an RGB LED light source, preferably configured to emit light in multiple colours. The hollow element including at least one LED, preferably RGB (Red-Green-Blue) LED light source that emits light in multiple colours allows for customizing visual indications. By adjusting the intensity of each primary colour (red, green, and blue), the RGB LED can display a broad spectrum of colours, enabling dynamic and distinct visual feedback based on specific conditions or system states. The RGB LED can further provides distinct visual cues for various operational statuses, or fault conditions, improving clarity and usability. As a further advantage the RGB LED can be programmed to display specific colours or colour patterns based on user requirements, enabling the adaptability of the status indicator for different applications. Furthermore, multi-colour indication improves operator awareness, making it easier to quickly identify live cables, system status changes, or warning signals. The RGB LED can indicate e. g. voltage presence or absence operational status (e.g., active, idle, fault) or specific voltage ranges (e.g., low, medium, high).

In some embodiments the LED light source is configured as at least one LED strip with the LED strip received in the cavity in particular extending partially or fully along the inner circumference of the hollow element. Thereby, the LED strip can comprise multiple LED elements such as single LEDs or LED strips, arranged linearly or in parallel and embedded or attached within the cavity of the hollow element. This configuration ensures even distribution of light around the circumference of the hollow element in the transparent region, providing a clear and uniform visual indication of a connector status. By extending along the inner circumference, the LED strip ensures an evenly distributed and continuous light output, enhancing the visibility and clarity of the status indication from multiple angles. As an option the LED strip can be configured with various lighting options, such as distinct colours, flashing patterns, or intensity levels, to convey specific statuses, or warnings. LED strips benefit from being flexible and easily adaptable to varied sizes or shapes of the cavity and/or hollow element, thus ensuring compatibility with a range of element designs and dimensions.

In some embodiments, the at least one light source is powered by an integrated circuit comprising one of a resistor or a buck converter and a capacitor power supply. It is considered as an advantage that the specific power supply configuration can be chosen based on the operating voltage range of the application. For lower voltages (e.g., <12V or fixed 24V DC), a resistor may be used for simple and cost-effective current regulation. For mid-range DC voltages (e.g., 12-120V), a buck converter provides efficient voltage step-down conversion. For high AC voltages (e.g., 90-680V AC), a capacitor power supply is utilized to deliver stable power to the light source. The use of different power regulation components (resistor, buck converter, or capacitor power supply) enables the light source to operate efficiently across a wide range of voltages, making the system suitable for diverse applications.

In some embodiments, the hollow element includes means for fixing the received cable gland body at a circumference of the second end. These fixing means are configured as latching, plugging, clamping, or threading mechanisms, ensuring a secure and adaptable connection.

The variety of fixing configurations (latching, plugging, clamping, threading) allows for flexible integration with different types of cable gland bodies, accommodating various design preferences and application requirements. Each of the aforementioned fixing mechanism provides a reliable and stable connection, preventing unintended disassembly and maintaining the integrity of the assembly under mechanical stress or vibration. The fixing means enable quick and tool-free installation or removal of the cable gland body, simplifying maintenance and adjustments. The adaptable nature of these fixing mechanisms ensures compatibility with a wide range of cable gland designs, supporting standardized as well as customized applications.

In some embodiments, the hollow element comprises at least one threaded portion extending the element body. The threaded portion allows for quick and straightforward attachment, requiring minimal tools, making it suitable for both new installations and retrofitting. By extending the element body, the threaded portion design enables a compact and integrated appearance, ensuring that the hollow element does not interfere with the overall functionality or dimensions of the plug connector assembly. The threaded design can be standardized to fit common cable sizes, such as M20, M25, or M32, ensuring broad applicability across different systems.

In some embodiments, the hollow element comprises sealing means configured as one of a separate sealing element, in particular seal ring and a sealing element moulded integrally with the element body provided at the first and/or second end. A seal ring that is positioned between the hollow element and the cable gland body and/or the connector housing has the advantage of providing a removable and replaceable sealing solution, while an integrally moulded sealing element moulded directly as part of the hollow element, ensures a seamless and permanent integration of the sealing function. Both configurations provide an effective barrier against environmental ingress, such as dust, moisture, and other contaminants, and support ingress protection ratings such as IP66 and IP68. The option of providing either a separate or integrally moulded sealing element allows for adaptability in different manufacturing and application scenarios.

The invention further provides a plug connector assembly comprising a connector housing, a hollow element according to the invention and a cable gland comprising a cable gland body, with the hollow element being disposed between the connector housing and the cable gland body, wherein the first end of the hollow element is attached to the connector housing and the cable gland body is received in the second end of the hollow element. In a further embodiment the connector assembly the cable gland body received in the second end covers the cavity provided at the inner circumference of the hollow element and the light source within the cavity. It is an advantage that a connector assembly can be provided that is able to indicate a status of the assembly either with a preconfigured design or by retrofitting a standard assembly with the hollow element incorporating the indicator means such as light sources. The assembly has the benefit that the light source can be incorporated in a cavity within the hollow element either by moulding or insertion and is protected and secured or held in position by the cable gland body received in the hollow element. This allows for an easy and fast assembly that complies with requirements as to stability of incorporation of the light source as well as enhanced visibility of the status indication due to the at least partial transparent design of the hollow element, in particular in the region of the included light source.

In some embodiments the hollow element is attached to the connector housing and or the cable gland body by means of a threaded connection. This has the advantage to provide a reliable and strong connection that allows for fast and tool-free assembly and disassembly as well as compliance with various assembly configurations and designs.

In some embodiments connection leads a guided from the light source into the connector housing through the hollow element. This has the advantage of providing a reliable and easy to assemble configuration to supply voltage to the light source. Guiding the connection leads through the hollow element facilitates assembly, in particular during retrofitting.

In some embodiments the plug connector assembly is configured as an industrial plug connector assembly and/or comprises at least one industrial plug connector. The hollow element of the invention advantageously provides a high degree of protection against the ingress of water and dust even in difficult and demanding environments and thus enhances durability and resistance of the connector assembly and improved visibility of status indication.

As used in the context with the description of the present invention the term "industrial plug connector" (also referred to as heavy-duty plug connector), "industrial plug connector assembly" (also referred to as heavy-duty plug connector assembly) and "industrial connector" (also referred to as heavy-duty connector) are defined as plug connector, plug connector assembly or connector each characterised by a particularly robust construction and having a high degree of protection against the ingress of water and dust and an enhanced resistance to high levels of vibration during use. These connectors are used for example - and without restricting the invention thereto- in the field of mining, agriculture, construction work, as well as in trains, aircraft and other environments with high demands with respect to durability, reliability and wear resistance.

The invention further provides a connector status indication system in a connector assembly according to the invention comprising the hollow element of the invention. The connector status indication system is configured to provide a light signal indicative of a connector status emitted by the at least one light source inserted in a cavity the hollow element or formed integrally with the hollow element, wherein the light signal is visible at an outer surface of the hollow element through the transparent region of the hollow element. The status indication element can be used to indicate the status of a connector by a light source connected to current leading wires of a connector thus independent from an active, i.e. plugged status of the connector. The light source can be configured to provide several status indications independent of the presence or absence of a voltage on the cable provided with the cable gland. The system can indicate e. g. voltage presence or absence but also additional conditions, such as operational status (e.g., active, idle, fault), specific voltage ranges (e.g., low, medium, high) or plugging status (plugged, unplugged, or incompletely plugged). With the hollow element used in the system being formed at least partially of a transparent material and including at least one light source configured to emit light visible through the transparent material, the status indication has enhanced visibility also from different perspectives or angles.

In some embodiments the at least one light source comprises pre-attached connection leads connectable to current-carrying wires within the connector housing with a connection being established by plug or clamp contacts, tapping contacts or crimping while in alternative embodiments encompassed by the invention connection leads attached to current-carrying wires within connector housing are provided and attached to electrical connection means, in particular plug or clamp contacts, connecting clamps or a terminal block provided at the light source within the hollow element. Both configurations have the advantage of ensuring a secure and efficient interface between the light source and the electrical wiring in the connector housing. The light source equipped with pre-attached leads, which can be connected to current-carrying wires using the previously mentioned connection means simplifies the process of implementing the system in a connector assembly. In contrast thereto, the light source being provided with connection mechanisms such as connecting clamps or a terminal block allows for direct and secure attachment of current-carrying wires, ensuring a reliable electrical interface. Both pre-attached leads and integrated connection have the advantage of simplifying the process of connecting the light source, reducing installation time and complexity. The availability of plug or clamp contacts, tapping contacts, crimping, clamps, or terminal blocks provides flexibility for different installation methods and use requirements. As an advantage the connection options make the connector status indication system compatible with a variety of cable types, current-carrying wires, and connector assembly configurations.

In some embodiments the light source is configured as an LED light source in particular an RGB LED light source configured to emit distinct colours or light patterns (e.g., changing colours or flashing signals) indicative of a respective connector status. This has the advantage of providing a clearly visible and distinguishable status indication that improves the useability and enlarges the fields of use of the connector status indication system. The RGB LED light source can be configured to emit light in multiple colours. This has the advantage of enabling the status indication system to display a variety of colours, which can be used to represent different voltage levels, operational states, or warning conditions by means of a clear and distinct visual indication. RGB LEDs further allow for tailored colour outputs, such as green for safe status, red for dangerous status, or blue for standby or inactive states, allowing for intuitive interpretation. The colour-changing capability of the RGB LED can also be used for indicating fault conditions, power levels, or specific operational modes.

In some embodiments the hollow element is provided as a retrofitting part for connection with each of the connector housing and the cable gland body. This configuration has the advantage of enabling integration of the connector status indicator system into connector assemblies that were not originally equipped with such functionality, thus providing an upgrade solution.

In some embodiments of the connector status indication system, the at least one light source is powered by an integrated circuit comprising one of a resistor or a buck converter and a capacitor power supply. It is considered as an advantage that the specific power supply configuration can be chosen based on the operating voltage range of the application. For lower voltages (e.g., <12V or fixed 24V DC), a resistor may be used for simple and cost-effective current regulation. For mid-range DC voltages (e.g., 12-120V), a buck converter provides efficient voltage step-down conversion. For high AC voltages (e.g., 90-680V AC), a capacitor power supply is utilized to deliver stable power to the light source. The use of different power regulation components (resistor, buck converter, or capacitor power supply) enables the light source to operate efficiently across a wide range of voltages, making the system suitable for diverse applications.

The invention further provides a use of a hollow element according to the invention, in a plug connector assembly, in particular a plug connector assembly as encompassed by the invention.

### Brief description of the drawings

Examples of embodiments of the invention are shown in the drawings and are explained in more detail below. It shows:
**Fig. 1** a side perspective view of a hollow element according to an embodiment of the present invention attached to a cable gland;
**Fig. 2** a sectional side view of a hollow element according to another embodiment of the present invention disposed between a cable gland and a connector housing; and
**Fig. 3** a sectional view of a voltage status indication system to an embodiment of the present invention.

The figures contain partially simplified, schematic representations. In some cases, identical reference numerals are used for identical, but possibly not identical, elements. Different views of the same elements may be scaled differently. Directional indications such as "left, "right", "top" and "bottom" are to be understood with reference to the respective figure and may vary in the individual representations with respect to the object shown.

### Detailed description of embodiments

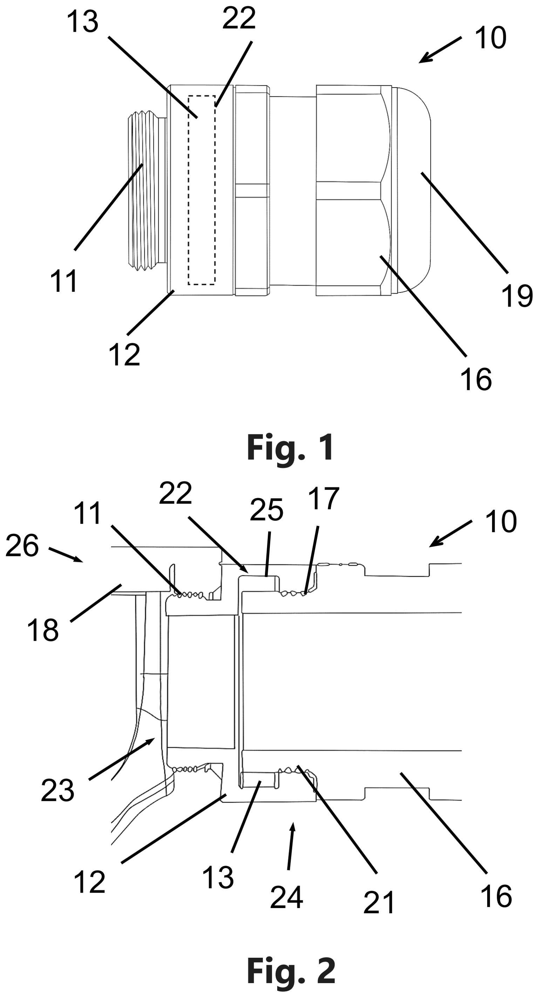

**Fig. 1** shows a side perspective view of a hollow element 12 according to an embodiment of the present invention attached to a cable gland 10. The hollow element 12 comprises a threaded portion 11, which allows secure attachment to connector housing 18, ensuring a sealed and reliable connection. The threaded portion 11 is configured as part of the hollow element 12 integrally moulded with a cable gland body 16. The hollow element 12 is formed at least in part of a transparent material and includes at least one incorporated light source 13, in particular LED light source, inserted in a cavity 22 provided in an inner circumference 25 of the hollow element 12 in the transparent region configured to provide visual status indication. The cable gland body 16 provides structural integrity and houses internal components, such as sealing elements, which ensure cable retention and protection against environmental factors. On the right side of the cable gland body 16, a sealing nut 19 is provided, which compresses internal sealing components of the cable gland 10 around a cable (not shown), offering strain relief and maintaining the ingress protection rating of the cable gland 10. The integrally moulded design of the hollow element 12 simplifies installation and enhances durability while ensuring seamless integration into the overall structure of the cable gland 10.

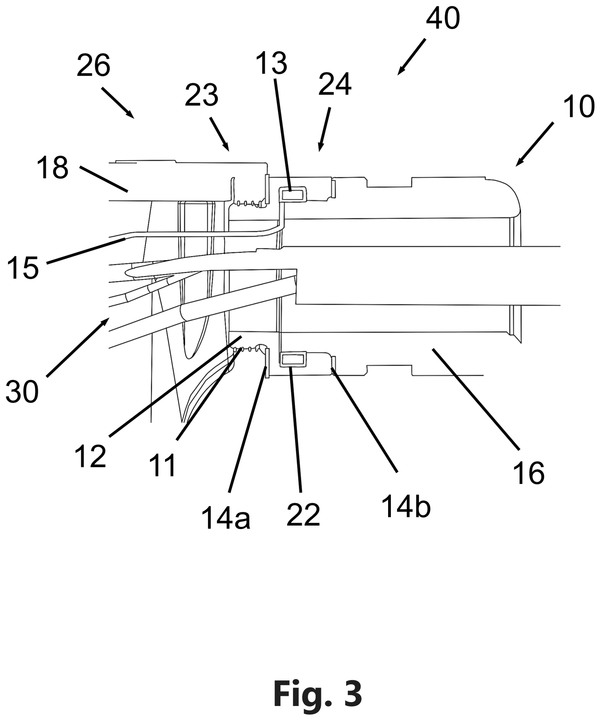

**Fig. 2** shows a sectional side view of a hollow element 12 according to another embodiment of the present invention disposed between a cable gland 10 and a connector housing 18 in a plug connector assembly 26. In this embodiment, the hollow element 12 is provided as a separate component configured as an intermediate adapter between the cable gland body 16 and a connector housing attached to the first end 23 of the hollow element 12. The hollow element 12 includes an internal screw thread 21, which engages with a corresponding external thread 17 on the cable gland body 16 inserted in a second end 24 of the hollow element 12, ensuring a secure and tight connection with the cable gland body 16. The threaded portion 11 provided on the first end 23 of the hollow element 12 is used for connection with the connector housing 18. The hollow element 12 is constructed at least in part from a transparent material, such as polycarbonate or similar, allowing light emitted by the light source 13, in particular an LED light source, to be visible externally. The light source 13 is fully inserted in a cavity 22 provide in the inner circumference 25 of the hollow element 12 in the transparent region, ensuring protection against environmental factors such as dust and moisture. The cavity 22 is designed to accommodate a strip or array of LED, which are positioned circumferentially within the hollow element 12 to provide uniform light distribution. The cable gland body 16 inserted in the hollow element 12 covers the cavity 22 from within the hollow element 12 and secures the light source 13 against removal of from the cavity 22. The hollow element 12 can be equipped with pre-attached connection leads 15 (cf. Fig. 3), which extend from the light source 13 and are configured for connection to a current-carrying wires using methods such as crimping or tapping. The hollow element 12 can be manufactured using i. a. injection moulding or additive manufacturing, such as 3D printing. The design of the hollow element 12 according to the embodiment presented in Fig. 2 allows for retrofitting onto existing cable glands 10 and connector assemblies without requiring significant modifications, making it highly versatile and cost-effective. Additionally, the transparent material and integrated light source 13 ensure clear and reliable visual indication of the connector status.

**Fig. 3** shows a sectional view of a connector status indication system 40 according to an embodiment of the present invention in a plug connector assembly 26. The hollow element 12 is provided as a separate component, positioned as an intermediate adapter between the cable gland body 16 and a connector housing 18. The second end 24 of hollow element 12 is press fit onto the cable gland body 16 and provides at its first end 23 a threaded portion 11 extending into the connector housing 18 establishing a threaded connection between the connector housing 18 and the hollow element 12. The hollow element 12 is manufactured at least in part from a transparent material, such as polycarbonate, using injection moulding or additive manufacturing. It includes a light source 13, configured as an LED strip, which is circumferentially positioned within the hollow element 12 to provide uniform light emission through the transparent material. The LED strip is enclosed in a circumferential cavity 22 inside the hollow element 12. The cavity 22 is closed by a front portion of the cable gland body 16 received in the second end 24 hollow element 12 extending into the hollow element 12. The light source 13 is connected to the voltage-carrying wires 30 in the connector housing 18 via pre-attached connection leads 15 that extend through the hollow element 12 into the connector housing 18. Various electrical connection options are available for connecting the light source 13 to the wires 30, including tapping contacts such as insulation displacement connectors, used to pierce the insulation of the current-carrying wires 30, establishing a secure electrical connection without requiring wire stripping; crimping, wherein the connection leads 15 can be terminated using crimp sleeves or terminals for a reliable and durable connection to the wires 30; terminal block or clamps wherein the light source 13 can be equipped with a terminal block or connecting clamps within the hollow element 12, allowing for direct wire attachment. Additionally, the hollow element 12 of the embodiment incorporates seals 14a, b positioned at the interface between the cable gland body 16 and the hollow element 12 and the interface between the hollow element 12 and the connector housing 18, ensuring ingress protection (e.g., IP66/IP68) and maintaining the overall integrity of the assembly. This design provides an effective, easy-to-install retrofitting solution for adding status indication functionality to an existing plug connector assembly 26.

### Reference numerals

- 10: cable gland
- 11: threaded portion
- 12: hollow element
- 13: light source
- 14a, b: seal
- 15: connection leads
- 16: cable gland body
- 17: external thread
- 18: connector housing
- 19: sealing nut

- 21: internal screw thread
- 22: cavity
- 23: first end
- 24: second end
- 25: circumference
- 26: plug connector assembly

- 30: wire

- 40: connector status indication system

## Claims

1. Hollow element (12) for a connector housing (18) of a plug connector, the hollow element (12) having an elongated element body with a first axial end (23) and a second axial end (24), with the first axial end (23) being configured for connection with the connector housing (18) and the second axial end (24) being configured for receiving a cable gland body (16) of a cable gland (10), wherein the element body of the hollow element (12) comprises a transparent region with a cavity (22) provided on an inner circumference (25) of the hollow element (12) facing the received cable gland body (16) and wherein the cavity (22) is configured for housing at least one light source (13).

2. Hollow element (12) according to claim 1, wherein the cavity (22) is configured closeable by the received cable gland body (16).

3. Hollow element (12) according to claim 1 or 2, wherein the cavity (22) is provided in a region of the element body adjacent to the second axial end (24) of the element body.

4. Hollow element (12) according to any one of claims 1 to 3, wherein means for mechanically attaching the element body to the connector housing (18) and/or the cable gland body (16) are provided at the first and/or second axial end (23, 24).

5. Hollow element (12) according to any one of claims 1 to 4 wherein the hollow element (12) is integrally moulded with the connector housing (18) or the cable gland body (16) or provided as a separate element connectable with the connector housing (18) and the cable gland body (16).

6. Hollow element (12) according to any one of claims 1 to 5, wherein the at least one light source (13) comprises pre-attached connection leads (15) configured for connection to current-carrying wires (30) within the connector housing (18) by plug or clamp contacts, tapping contacts or crimping.

7. Hollow element (12) according to any one of claims 1 to 6, wherein the at least one light source (13) is configured as an LED light source, in particular an RGB LED light source, preferably configured to emit light in multiple colours or patterns.

8. Hollow element (12) according to any one of claims 1 to 7, wherein sealing means (14a, b) configured as either a separate seal element, in particular a seal ring, or a sealing element moulded integrally with the element body are provided at the first and/or second end (23, 24).

9. A plug connector assembly (26) comprising a connector housing (18), a hollow element (12) according to any one of claims 1 to 8 and a cable gland (10) comprising a cable gland body (16), with the hollow element (12) being disposed between the connector housing (18) and the cable gland body (16), wherein the first end (23) of the hollow element (12) is attached to the connector housing (18) and the cable gland body (16) is received in the second end (24) of the hollow element (12).

10. Plug connector assembly (26) according to claim 9, wherein the hollow element (12) is attached to the connector housing (18) and/or the cable gland body (16) by means of a threaded connection.

11. Plug connector assembly according to claim 9 or 10, wherein the connector assembly is configured as an industrial plug connector assembly and/or comprises at least one industrial plug connector.

12. A connector status indication system (40) in a plug connector assembly (26) according to any one of claims 9 to 11 comprising a hollow element (12) according to any one of claims 1 to 8, configured to provide a light signal indicative of a connector status emitted by the at least one light source (13) inserted in a cavity (22) of the hollow element (12) or formed integrally with the hollow element (12), wherein the light signal is visible at an outer surface of the hollow element (12) through the transparent region of the hollow element (12).

13. Connector status indication system (40) according to claim 12, wherein the at least one light source (13) comprises pre-attached connection leads (15) connectable to current-carrying wires (30) within the connector housing (18) with a connection being established by plug or clamp contacts, tapping contacts or crimping.

14. Connector status indication system (40) according to claim 12 or 13, wherein the at least one light source (13) is configured as an LED light source (13), in particular an RGB LED light source (13) configured to emit light in multiple colours or patterns, wherein distinct colours or patterns are indicative for a respective connector status.

15. Use of a hollow element according to any one of claims 1 to 8 in a plug connector assembly, in particular a plug connector assembly according to any one of claims 9 to 11.
